# EUROPEAN PATENT APPLICATION

(11) **EP 4 844 246 A1**
(43) Date of publication of application: **25.11.2026**
(21) Application number: 24923847.8
(22) Date of filing: 13.09.2024
(51) Int. Cl.: F16J 9/00, F02F 5/00

(54) **PISTON RING SET FOR INTERNAL COMBUSTION ENGINE USING HYDROGEN FUEL, PISTON RING, AND METHOD FOR SUPPRESSING DEPOSIT FORMATION IN INTERNAL COMBUSTION ENGINE USING HYDROGEN FUEL**

(30) Priority: 09.02.2024 JP 2024018557
(71) Applicant: NPR-RIKEN CORPORATION, Tokyo 102-8202 (JP)
(72) Inventor: SUZUKI Itsuro, Kashiwazaki-shi, Niigata 945-8555 (JP)
(74) Representative: Arnold & Siedsma
(86) International application number: PCT/JP2024/032934
(87) International publication number: WO 2025/169528

(57) **Abstract**

A piston ring set for an internal combustion engine that uses hydrogen fuel includes a pressure ring and an oil control ring that are to be respectively assembled into a plurality of ring grooves of a piston of the internal combustion engine that uses hydrogen fuel. The piston ring set suppresses generation of deposits on a land portion of the piston and in the ring grooves accompanying combustion of the hydrogen fuel by setting a surface pressure of an outer peripheral surface of the pressure ring against an inner peripheral surface of a cylinder of the internal combustion engine to 0.22 MPa or more and 0.69 MPa or less, and setting a surface pressure of an outer peripheral surface of the oil control ring against the inner peripheral surface of the cylinder to 0.89 MPa or more and 3.87 MPa or less.

## Description

### Technical Field

The present disclosure relates to a piston ring set and a piston ring for an internal combustion engine that uses hydrogen fuel, and a method of suppressing generation of deposits in an internal combustion engine that uses hydrogen fuel.

### Background Art

Conventionally, in piston rings installed on pistons of internal combustion engines, techniques for suppressing ring seizure caused by carbon sludge have been known (for example, Patent Literature 1).

### Citation List

### Patent Literature

[Patent Literature 1]: Japanese Utility Model Application Laid-Open No. H04-101067

### Summary of Invention

### Technical Problem

In conventional internal combustion engines using diesel fuel and internal combustion engines using gasoline fuel, carbon sludge, which is a deposit containing a carbon component, is generated. With diesel fuel, carbon sludge is generated starting from the top land, particularly in piston portions in the top ring groove on the side of the piston closer to the combustion chamber. With gasoline fuel, carbon sludge is generated in piston portions in the oil ring groove on the side of the piston farther from the combustion chamber. The present inventors have discovered that, in internal combustion engines using hydrogen fuel, deposits are generated in each land portion of the piston and in the ring grooves. Upon investigating the components of the deposits, the present inventors found that the deposits generated in internal combustion engines using hydrogen fuel did not contain a carbon component, unlike the carbon sludge generated in internal combustion engines using hydrocarbon fuels such as diesel fuel and gasoline fuel. The deposits generated in internal combustion engines using hydrogen fuel were compounds of additives containing metal elements (for example, Ca, S, and the like) in engine oil. In the following description, deposits generated in internal combustion engines using hydrogen fuel are simply referred to as "deposits" to distinguish them from carbon sludge. In internal combustion engines using hydrogen fuel, when deposits accumulate on the land portions of the piston and the thickness increases, the deposits may slide against the inner peripheral surface of the cylinder, potentially promoting wear of the inner peripheral surface of the cylinder. Furthermore, there is a concern that as the gap between the land portions of the piston and the inner peripheral surface of the cylinder narrows, the amount of blow-by gas from combustion gas decreases, and the amount of engine oil rising increases due to an increase in the amount of reverse flow gas. In addition, when deposits accumulate on the piston rings, the appropriate movement of the piston rings may be impeded. As a result of these factors, the sealing performance between the piston rings and the inner peripheral surface of the cylinder may decrease, and engine oil consumption may increase significantly.

An object of the present disclosure is to suppress generation of deposits on land portions of a piston and in ring grooves accompanying combustion of hydrogen fuel in an internal combustion engine that uses hydrogen fuel.

### Solution to Problem

In order to solve the above problem, the present inventors have conducted intensive studies. As a result, the present inventors have found that, in an internal combustion engine using hydrogen fuel, hydrogen gas that has leaked from the top surface side of the piston toward the crankcase through a pressure ring reacts with engine oil that has risen from the crankcase side toward the land portions of the piston through an oil control ring, thereby generating deposits on the land portions of the piston and in the ring grooves. If the surface pressure of the outer peripheral surface of the piston ring against the inner peripheral surface of the cylinder is too high, the outer peripheral surface of the piston ring and the inner peripheral surface of the cylinder tend to wear, and the sealing performance between the piston ring and the inner peripheral surface of the cylinder tends to decrease. As a result, hydrogen gas and engine oil tend to reach the land portions more easily. If the surface pressure of the outer peripheral surface of the piston ring against the inner peripheral surface of the cylinder is too low, the amount of engine oil rising tends to increase. As a result, engine oil tends to reach the land portions more easily. Taking such a trade-off into consideration, the present inventors have found a surface pressure of the outer peripheral surface of the piston ring against the inner peripheral surface of the cylinder that can suppress generation of deposits on the land portions of the piston and in the ring grooves accompanying combustion of hydrogen fuel.

One aspect of the present disclosure is a piston ring set including a pressure ring and an oil control ring that are to be respectively assembled into a plurality of ring grooves of a piston of an internal combustion engine that uses hydrogen fuel, wherein, by setting a surface pressure of an outer peripheral surface of the pressure ring against an inner peripheral surface of a cylinder of the internal combustion engine to 0.22 MPa or more and 0.69 MPa or less, and setting a surface pressure of an outer peripheral surface of the oil control ring against the inner peripheral surface of the cylinder to 0.89 MPa or more and 3.87 MPa or less, generation of deposits on a land portion of the piston and in the ring grooves accompanying combustion of the hydrogen fuel is suppressed.

In the piston ring set according to one aspect of the present disclosure, the surface pressure of the outer peripheral surface of the pressure ring against the inner peripheral surface of the cylinder of the internal combustion engine is set to 0.22 MPa or more and 0.69 MPa or less. The surface pressure of the outer peripheral surface of the oil control ring against the inner peripheral surface of the cylinder is set to 0.89 MPa or more and 3.87 MPa or less. This suppresses the tendency of the outer peripheral surface of the piston ring and the inner peripheral surface of the cylinder to wear due to excessively high surface pressure. An increase in engine oil rising due to excessively low surface pressure is suppressed. As a result, reaction between hydrogen gas that has leaked from the top surface side of the piston toward the crankcase through the pressure ring and engine oil that has risen from the crankcase side toward the land portions of the piston through the oil control ring is suppressed. Therefore, in an internal combustion engine using hydrogen fuel, it becomes possible to suppress generation of deposits on the land portions of the piston and in the ring grooves accompanying combustion of the hydrogen fuel.

In one embodiment, the plurality of ring grooves may include, in order from a top surface side of the piston, a pressure ring groove into which the pressure ring is assembled, and an oil ring groove into which the oil control ring is assembled, and the deposits may be generated on the land portion between the pressure ring groove and the oil ring groove.

Another aspect of the present disclosure is a piston ring including a pressure ring that is to be assembled into a ring groove of a piston of an internal combustion engine that uses hydrogen fuel, wherein, by setting a surface pressure of an outer peripheral surface of the pressure ring against an inner peripheral surface of a cylinder of the internal combustion engine to 0.22 MPa or more and 0.69 MPa or less, generation of deposits on a land portion of the piston and in the ring groove accompanying combustion of the hydrogen fuel is suppressed. Alternatively, another aspect of the present disclosure is a piston ring including an oil control ring that is to be assembled into a ring groove of a piston of an internal combustion engine that uses hydrogen fuel, wherein, by setting a surface pressure of an outer peripheral surface of the oil control ring against an inner peripheral surface of a cylinder of the internal combustion engine to 0.89 MPa or more and 3.87 MPa or less, generation of deposits on a land portion of the piston and in the ring groove accompanying combustion of the hydrogen fuel is suppressed.

In the piston ring according to another aspect of the present disclosure, the surface pressure of the outer peripheral surface of the pressure ring against the inner peripheral surface of the cylinder of the internal combustion engine is set to 0.22 MPa or more and 0.69 MPa or less. Alternatively, the surface pressure of the outer peripheral surface of the oil control ring against the inner peripheral surface of the cylinder is set to 0.89 MPa or more and 3.87 MPa or less. This suppresses the tendency of the outer peripheral surface of the piston ring and the inner peripheral surface of the cylinder to wear due to excessively high surface pressure. Alternatively, an increase in engine oil rising due to excessively low surface pressure is suppressed. As a result, reaction between hydrogen gas that has leaked from the top surface side of the piston toward the crankcase through the pressure ring and engine oil that has risen from the crankcase side toward the land portions of the piston through the oil control ring is suppressed. Therefore, in an internal combustion engine using hydrogen fuel, it becomes possible to suppress generation of deposits on the land portions of the piston and in the ring grooves accompanying combustion of the hydrogen fuel.

Still another aspect of the present disclosure is a method of suppressing generation of deposits in an internal combustion engine that uses hydrogen fuel, the method including: a preparation step of preparing a piston ring set including a pressure ring and an oil control ring of the internal combustion engine that uses hydrogen fuel; and an assembling step of respectively assembling the pressure ring and the oil control ring into a plurality of ring grooves of a piston of the internal combustion engine, wherein the preparation step includes at least one of a step of setting a surface pressure of an outer peripheral surface of the pressure ring against an inner peripheral surface of a cylinder of the internal combustion engine to 0.22 MPa or more and 0.69 MPa or less, and a step of setting a surface pressure of an outer peripheral surface of the oil control ring against the inner peripheral surface of the cylinder to 0.89 MPa or more and 3.87 MPa or less, so that generation of deposits on a land portion of the piston and in the ring grooves accompanying combustion of the hydrogen fuel is suppressed.

In the method of suppressing generation of deposits according to still another aspect of the present disclosure, in the preparation step, the surface pressure of the outer peripheral surface of the pressure ring against the inner peripheral surface of the cylinder of the internal combustion engine is set to 0.22 MPa or more and 0.69 MPa or less, or the surface pressure of the outer peripheral surface of the oil control ring against the inner peripheral surface of the cylinder is set to 0.89 MPa or more and 3.87 MPa or less. This suppresses the tendency of the outer peripheral surface of the piston ring and the inner peripheral surface of the cylinder to wear due to excessively high surface pressure. Alternatively, an increase in engine oil rising due to excessively low surface pressure is suppressed. As a result, reaction between hydrogen gas that has leaked from the top surface side of the piston toward the crankcase through the pressure ring and engine oil that has risen from the crankcase side toward the land portions of the piston through the oil control ring is suppressed. Therefore, in an internal combustion engine using hydrogen fuel, it becomes possible to suppress generation of deposits on the land portions of the piston and in the ring grooves accompanying combustion of the hydrogen fuel.

### Advantageous Effects of Invention

According to the present disclosure, in an internal combustion engine using hydrogen fuel, it becomes possible to suppress generation of deposits on the land portions of the piston and in the ring grooves accompanying combustion of the hydrogen fuel.

### Brief Description of Drawings

FIG. 1 is a cross-sectional view schematically illustrating a piston ring set according to one embodiment.
FIG. 2 is a cross-sectional view of the top ring of FIG. 1.
FIG. 3 is a cross-sectional view of the second ring of FIG. 1.
FIG. 4 is a perspective view of the oil control ring of FIG. 1.
FIG. 5 is an exploded perspective view of the oil control ring of FIG. 4.
FIG. 6 is a plan view of the oil ring main body portion of FIG. 5.
FIG. 7 is a cross-sectional view taken along line VI-VI of FIG. 6.
FIG. 8 is a flowchart illustrating a method of suppressing generation of deposits in an internal combustion engine using hydrogen fuel according to one embodiment.
FIG. 9 is a graph of simulation results illustrating the relationship between the surface pressure of the top ring and the deposit accumulation amount ratio.
FIG. 10 is a graph of simulation results illustrating the relationship between the surface pressure of the oil control ring and the deposit accumulation amount ratio.

### Description of Embodiments

Hereinafter, embodiments of the present disclosure will be described with reference to the drawings. In the following description, the same reference numerals are used for the same or corresponding elements, and redundant description is omitted. In the following description, the "upper side" corresponds to the top surface side of the piston (the top dead center side, the combustion chamber side), and the "lower side" corresponds to the skirt side of the piston (the bottom dead center side, the crankcase side). In the following description, the cross-sectional shape means a cross-sectional shape along a cross section including the central axis of the piston ring.

The piston ring set according to the present disclosure is applied to an internal combustion engine that uses hydrogen fuel. The internal combustion engine here is, for example, a 4-cycle reciprocating engine mounted on a vehicle or the like. The engine oil used in this internal combustion engine contains additives including metal elements. Examples of the metal elements contained in the engine oil include Ca, S, P, Zn, and the like.

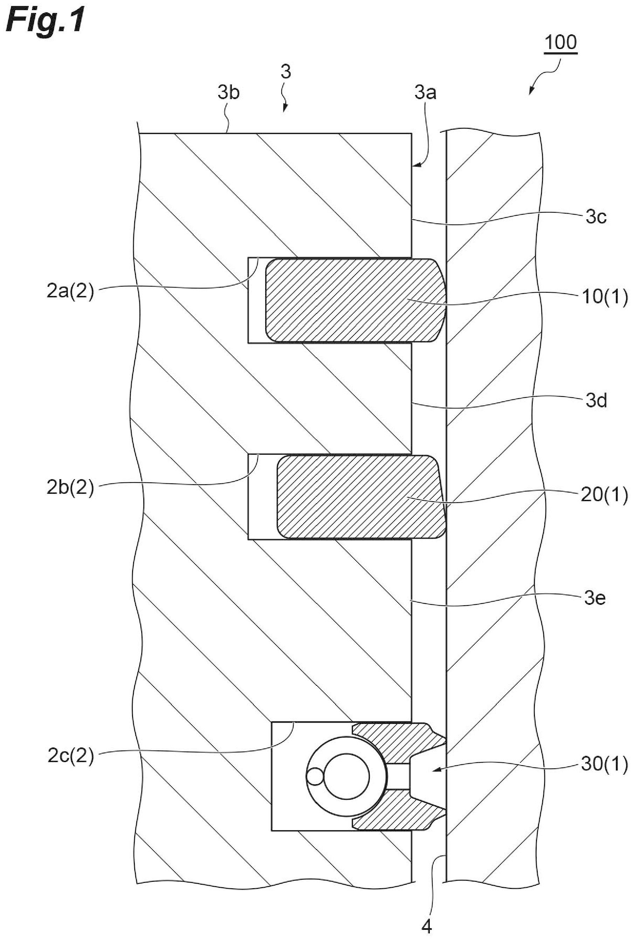

FIG. 1 is a cross-sectional view schematically illustrating a piston ring set according to one embodiment. The cross-sectional view of FIG. 1 is a cross-sectional view along the axial direction of a plurality of piston rings 1 constituting a piston ring set 100. FIG. 1 shows a schematic cross section of a part of a piston 3 disposed in a cylinder with the piston rings 1 installed in ring grooves 2. The axial direction of the piston ring 1 is the same direction as the reciprocating direction of the piston 3. The piston ring set 100 is a piston ring set for an internal combustion engine that uses hydrogen fuel.

As shown in FIG. 1, the plurality of piston rings 1 include an annular pressure ring and an annular oil control ring. The piston ring 1 is a piston ring for an internal combustion engine that uses hydrogen fuel. The plurality of piston rings 1 here are a top ring (pressure ring) 10, a second ring (pressure ring) 20, and an oil control ring 30. That is, the piston ring set 100 includes the top ring 10, the second ring 20, and the oil control ring 30. The top ring 10, the second ring 20, and the oil control ring 30 are respectively assembled into a plurality of ring grooves 2 of a piston 3 of an internal combustion engine that uses hydrogen fuel.

A plurality of ring grooves 2 are formed on a piston outer peripheral surface 3a of the piston 3. The plurality of ring grooves 2 here are, in order from the top surface 3b side of the piston, a top ring groove (pressure ring groove) 2a into which the top ring 10 is assembled, a second ring groove (pressure ring groove) 2b into which the second ring 20 is assembled, and an oil ring groove 2c into which the oil control ring 30 is assembled. The plurality of piston rings 1 are respectively assembled into the plurality of ring grooves 2.

The piston outer peripheral surface 3a here has, as land portions extending in a band shape in the circumferential direction, a top land 3c, a second land 3d, and a third land 3e. The top land 3c is the region of the piston outer peripheral surface 3a from the top surface 3b of the piston to the top ring groove 2a. The second land 3d is the region of the piston outer peripheral surface 3a from the top ring groove 2a to the second ring groove 2b. The third land 3e is the region of the piston outer peripheral surface 3a from the second ring groove 2b to the oil ring groove 2c.

Each piston ring 1 slides against the inner peripheral surface 4 of the cylinder to which engine oil adheres, while being in contact with the inner peripheral surface 4 of the cylinder at a predetermined surface pressure. As a result, each piston ring 1 can provide a gas sealing function between the combustion chamber side and the crank chamber side, a function of scraping off engine oil, a function of forming an oil film of engine oil, and the like. The inner peripheral surface 4 of the cylinder refers to the inner wall surface of the cylinder bore.

### [Top Ring]

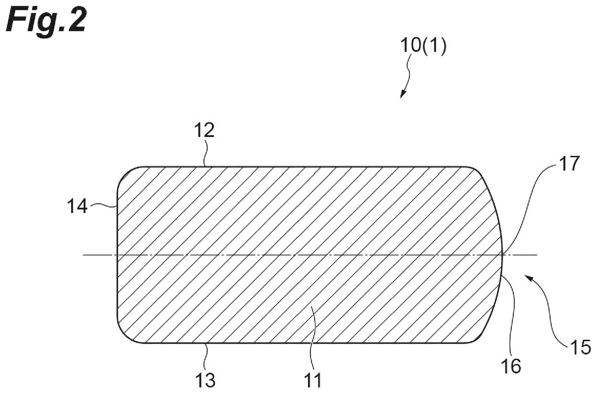

FIG. 2 is a cross-sectional view of the top ring of FIG. 1. As shown in FIGS. 1 and 2, the top ring 10 includes an annular main body portion 11 and a joint portion (not shown) formed in a part of the main body portion 11. The main body portion 11 has a pair of side surfaces 12 and 13. The main body portion 11 has an inner peripheral surface 14 and an outer peripheral surface 15. The side surfaces 12 and 13 are, for example, substantially orthogonal to the inner peripheral surface 14. In the following description, the direction connecting the side surface 12 and the side surface 13 is defined as the width direction of the piston ring 1, and the direction connecting the inner peripheral surface 14 and the outer peripheral surface 15 is defined as the thickness direction of the piston ring 1. The width direction of the piston ring 1 corresponds to the "vertical direction" and "axial direction."

The main body portion 11 has a substantially rectangular cross-sectional shape having long sides in the thickness direction and short sides in the width direction. The main body portion 11 is formed, for example, using cast iron or steel containing a plurality of metal elements, with sufficient strength, heat resistance, and elasticity.

A surface modification may be applied to the surface of the main body portion 11 to form a hard coating. The hard coating is, for example, a physical vapor deposition film (PVD film) formed by a physical vapor deposition method (PVD method). This allows the hard coating to be formed with sufficient hardness. The hard coating is an ion plating film containing at least one of titanium (Ti) and chromium (Cr), and at least one of carbon (C), nitrogen (N), and oxygen, or a diamond-like carbon (DLC) film. Specific examples of the hard coating are a titanium nitride film, a chromium nitride film, a titanium carbonitride film, a chromium carbonitride film, a chromium oxynitride film, a chromium film, or a titanium film. Among these, when wear resistance and scuffing resistance are emphasized, a chromium nitride film may be used. The hard coating may be a laminate, and may include, for example, a chromium nitride film, a diamond-like carbon film, and the like. The outer peripheral surface 15 of the top ring 10 here may have a hard coating (film) containing chromium nitride (CrN) formed thereon.

The joint portion is a portion where a part of the main body portion 11 is divided, and is formed by a pair of joint end portions facing each other. The pair of joint end portions are portions that are each a free end of the main body portion 11. The gap of the joint portion (joint gap) is configured to narrow, for example, when the top ring 10 is heated and thermally expands. The joint portion functions as a relief portion for thermal expansion of the main body portion 11 due to a temperature difference between the top ring 10 and the inner peripheral surface 4 of the cylinder during use of the top ring 10.

On the outer peripheral surface 15 of the main body portion 11 of the top ring 10, as an example, a curved surface 16 having a cross-sectional shape that curves convexly outward in the radial direction is provided. The curved surface 16 is, for example, an arcuate surface having both ends at the radially outer end of the side surface 12 and the radially outer end of the side surface 13. The vertex 17, which is the radially outermost point of the curved surface 16, is located, for example, at the midpoint between the side surface 12 and the side surface 13. The vertex 17 is located at the center in the width direction connecting the side surface 12 and the side surface 13 on the outer peripheral surface 15. The vertex 17 is the portion of the outer peripheral surface 15 that protrudes the most outward in the radial direction. The vertex 17 is the point that becomes the sliding contact portion with the inner peripheral surface 4 of the cylinder. The outer peripheral surface 15 of the top ring 10 has a barrel shape (BF shape) and is a symmetrical barrel shape that is symmetrical in the width direction with the vertex 17 as a boundary.

The size of the arcuate surface of the curved surface 16 can be defined by the barrel amount (drop dimension) in the radial direction of the top ring 10 between a point at a certain distance in the width direction from the vertex 17 and the position of the vertex 17. The points at a certain distance in the width direction from the vertex 17 are, for example, two points respectively located 0.8 mm above and below the vertex 17 in the width direction. The width between the points at a certain distance in the width direction from the vertex 17 is referred to as the measurement width of the barrel amount. The measurement width of the barrel amount here is 1.6 mm. The barrel amount of the curved surface 16 may be, for example, 0.008 mm, 0.016 mm, or the like. The outer diameter (nominal diameter) of the top ring 10 is, for example, 112 mm. Each dimension of the top ring 10 can be measured using a contact-type or non-contact-type shape measuring device.

The tension of the top ring 10 may be 10 N or more and 30 N. The tension of the top ring 10 can be measured in accordance with international standard ISO 6621-2:2020.

The surface pressure of the outer peripheral surface 15 of the top ring 10 against the inner peripheral surface 4 of the cylinder (hereinafter also referred to as "surface pressure of the top ring 10") may be 0.22 MPa or more and 0.69 MPa or less. The surface pressure of the top ring 10 may be 0.22 MPa or more and 0.67 MPa or less. The surface pressure of the top ring 10 may be 0.22 MPa or more and 0.49 MPa or less. The surface pressure of the top ring 10 may be 0.22 MPa or more and 0.33 MPa or less. The surface pressure of the top ring 10 may be 0.33 MPa or more and 0.69 MPa or less. The surface pressure of the top ring 10 may be 0.49 MPa or more and 0.69 MPa or less. The surface pressure of the top ring 10 may be 0.67 MPa or more and 0.69 MPa or less. The surface pressure of the top ring 10 may be, for example, 0.49 MPa.

The surface pressure P of each piston ring 1 can be calculated by the following equation (1). In the following equation (1), P is the surface pressure of the outer peripheral surface of the piston ring 1 against the inner peripheral surface 4 of the cylinder. Ft is the tension of the piston ring 1. D is the nominal diameter of the piston ring 1. W is the contact width of the piston ring 1 against the inner peripheral surface 4 of the cylinder.
[Math. 1] $P = \frac{2 \times Ft}{D \times W}$ (1)

The nominal diameter of the piston ring 1 is a dimension corresponding to the diameter of the cylinder bore. The nominal diameter of the piston ring 1 is not particularly limited, but may be, for example, 112 mm.

The contact width against the inner peripheral surface 4 of the cylinder may be an actually measured value or an estimated value. For example, in the top ring 10 having a symmetrical barrel shape, the contact width can be estimated by assuming the outer peripheral surface 15 to be a parabola. The contact width can be estimated by applying the barrel amount, the measurement width of the barrel amount, and an assumed wear amount in the radial direction corresponding to the contact width to a quadratic function whose vertex position is the vertex 17. The estimated contact width of the top ring 10 may be, for example, 0.5 mm or more and 2.5 mm.

### [Second Ring]

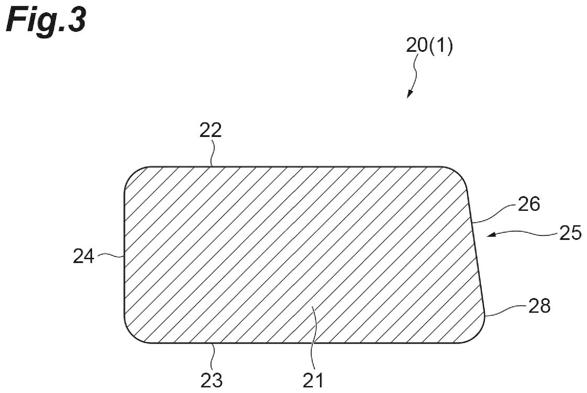

FIG. 3 is a cross-sectional view of the second ring of FIG. 1. As shown in FIGS. 1 and 3, the second ring 20 includes an annular main body portion 21 and a joint portion (not shown) formed in a part of the main body portion 21. The main body portion 21 has a pair of side surfaces 22 and 23. The main body portion 21 has an inner peripheral surface 24 and an outer peripheral surface 25. The side surfaces 22 and 23 are, for example, substantially orthogonal to the inner peripheral surface 24. The joint portion is configured, for example, in the same manner as the joint portion of the main body portion 11 of the top ring 10 described above.

The main body portion 21 has a substantially rectangular cross-sectional shape in which the thickness direction is the long side and the width direction is the short side. The main body portion 21 is formed, for example, using cast iron or steel containing a plurality of metal elements, with sufficient strength, heat resistance, and elasticity.

A surface modification may be applied to the surface of the main body portion 21 to form a hard coating, as in the main body portion 11 of the top ring 10 described above.

The outer peripheral surface 25 of the main body portion 21 of the second ring 20 includes, as an example, a tapered surface 26. The tapered surface 26 here is an inclined surface having a cross-sectional shape that protrudes radially outward as it extends toward the lower side. The tapered surface 26 extends, for example, so as to linearly connect the radially outer end of the side surface 22 and the radially outer end of the side surface 23. The vertex 28, which is the radially outermost point of the outer peripheral surface 25 of the second ring 20, is disposed on the bottom dead center side of the outer peripheral surface 25 in the width direction (axial direction) of the second ring 20. The vertex 28 is the portion of the outer peripheral surface 25 that protrudes the most outward in the radial direction. The vertex 28 is the point that becomes the sliding contact portion with the inner peripheral surface 4 of the cylinder.

The outer diameter (nominal diameter) of the second ring 20 is, for example, 112 mm. Each dimension of the second ring 20 can be measured using a contact-type or non-contact-type shape measuring device.

The tension of the second ring 20 may be 10 N or more and 30 N or less. The tension of the second ring 20 can be measured in accordance with international standard ISO 6621-2:2020, in the same manner as the tension of the top ring 10.

The surface pressure of the outer peripheral surface 25 of the second ring 20 against the inner peripheral surface 4 of the cylinder (hereinafter also referred to as "surface pressure of the second ring 20") may be, for example, 0.92 MPa.

### [Oil Control Ring]

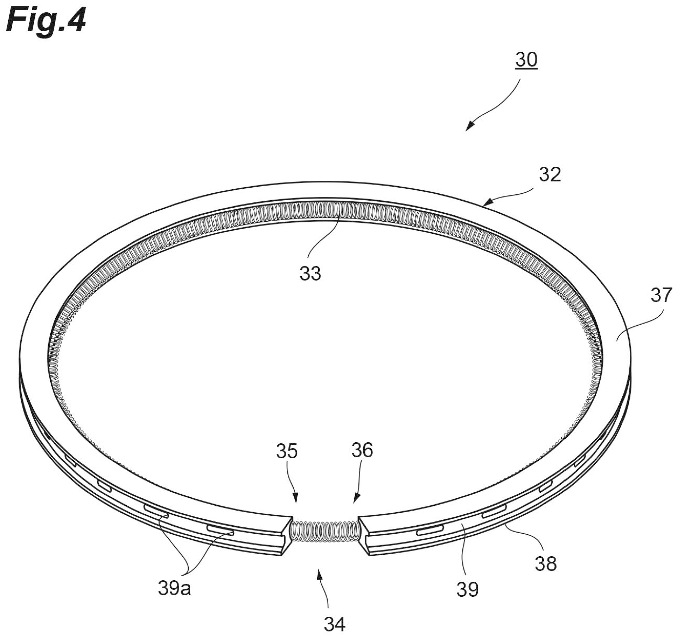

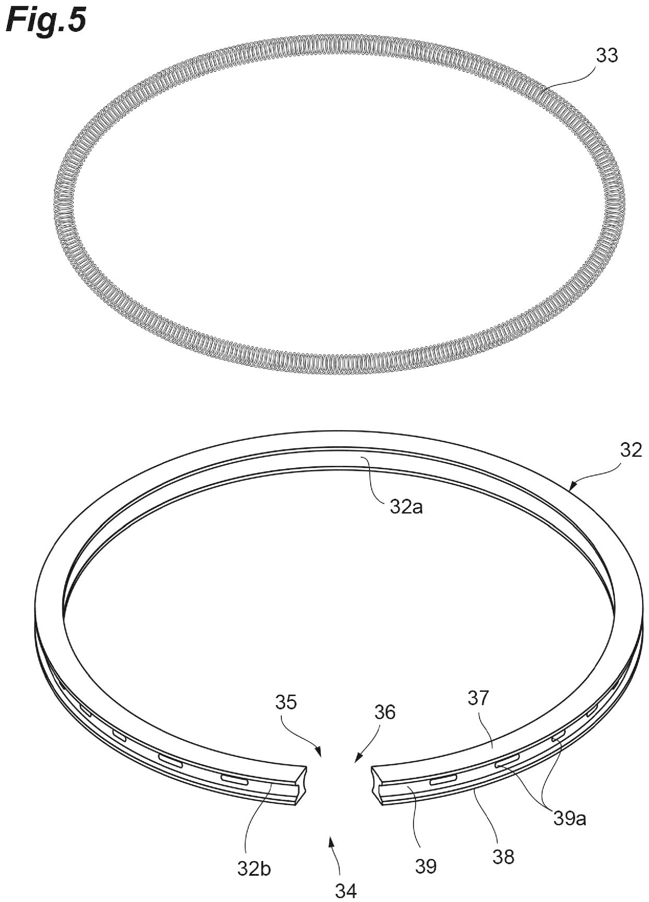

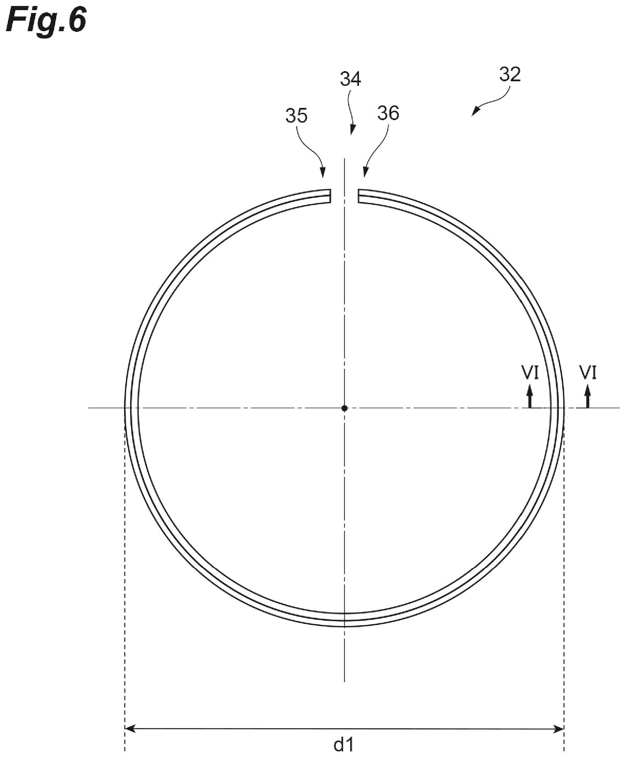

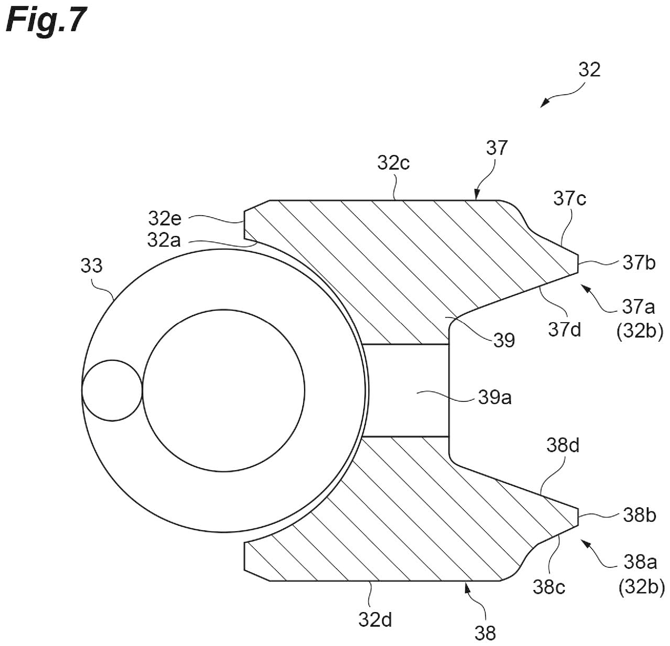

FIG. 4 is a perspective view of the oil control ring of FIG. 1. FIG. 5 is an exploded perspective view of the oil control ring of FIG. 4. FIG. 6 is a plan view of the oil ring main body portion of FIG. 5. FIG. 7 is a cross-sectional view taken along line VI-VI of FIG. 6.

As shown in FIGS. 4, 5, and 6, the oil control ring 30 includes an annular main body portion 32 and an annular coil expander 33 installed along an inner peripheral surface 32a of the main body portion 32. The oil control ring 30 is a so-called two-piece oil ring. A joint portion 34 is formed in the main body portion 32.

The main body portion 32 is in contact with the inner peripheral surface of the cylinder at a substantially constant surface pressure due to the tangential tension of the coil expander 33. The coil expander 33 is an annularly formed spring-like component, as shown in FIG. 5. The coil expander 33 is formed, for example, from a wire material such as oil-quenched spring steel.

The main body portion 32 is formed, for example, from cast iron or steel containing a plurality of metal elements so as to have the strength, heat resistance, and elasticity required for the intended use. The outer peripheral surface 32b and the like of the main body portion 32 are subjected to surface modification with, for example, a hard chrome plating layer, a chromium nitride layer, a PVD layer, or an iron nitride layer, to improve the wear resistance of the main body portion 32. The outer peripheral surface 32b of the main body portion 32 means the outer peripheral surface of the first rail portion 37 and the outer peripheral surface of the second rail portion 38.

As shown in FIGS. 4, 5, and 7, the main body portion 32 has a pair of a first rail portion 37 and a second rail portion 38. The main body portion 32 has a column portion 39 connecting the first rail portion 37 and the second rail portion 38.

As shown in FIG. 7, the inner peripheral surface 32a of the main body portion 32 has a curved surface shape recessed toward the column portion 39 side so as to accommodate the coil expander 33. The main body portion 32 has a pair of a side surface 32c (one side surface) and a side surface 32d (other side surface). The pair of side surfaces 32c and 32d are substantially orthogonal to a pair of end surfaces (inner peripheral surfaces) 32e on the radially inner side of the inner peripheral surface 32a. In the following description, the direction connecting the inner peripheral surface 32a and the outer peripheral surface 32b is defined as the thickness direction of the oil control ring 30. The direction connecting the side surface 32c and the side surface 32d is defined as the width direction of the oil control ring 30. The radial direction of the oil control ring 30 is a direction that coincides with the thickness direction.

The outer diameter (nominal diameter d1, see FIG. 6) of the main body portion 32 is, for example, 112 mm. Each dimension of the main body portion 32 can be measured using a contact-type or non-contact-type shape measuring device. The shape measuring device includes a surface roughness measuring device.

The pair of a first rail portion 37 and a second rail portion 38 face each other with the column portion 39 interposed therebetween in the axial direction of the oil control ring 30. The column portion 39 connects the central portions in the thickness direction of the first rail portion 37 and the second rail portion 38 to each other. The first rail portion 37 is disposed on the side surface 32c side of the column portion 39. The first rail portion 37 protrudes from the column portion 39 on both the radially inner and outer sides. The second rail portion 38 is disposed on the side surface 32d side of the column portion 39. The second rail portion 38 protrudes from the column portion 39 on both the radially inner and outer sides. The column portion 39 is formed thinner than the first rail portion 37 and the second rail portion 38 in the thickness direction. In this way, the main body portion 32 has a substantially H-shaped cross-sectional shape. The first rail portion 37 and the second rail portion 38 are integrally formed with the column portion 39.

As shown in FIGS. 4 and 5, a plurality of oil holes 39a are provided in the central portion of the column portion 39 in the width direction. The plurality of oil holes 39a are arranged along the circumferential direction of the oil control ring 30. The cross-sectional shape of each of the plurality of oil holes 39a along the circumferential direction is, for example, a substantially elliptical shape. As shown in FIG. 7, the oil holes 39a are provided at the axially central portion of the column portion 39. The oil holes 39a penetrate the column portion 39 in the radial direction.

The plurality of oil holes 39a are formed, for example, by cutting or laser drilling. Engine oil for lubricating the inner peripheral surface 4 of the cylinder is supplied to the inner peripheral surface 4 of the cylinder by passing through the plurality of oil holes 39a from the inner peripheral side to the outer peripheral side of the column portion 39. Engine oil on the inner peripheral surface 4 of the cylinder is returned to, for example, an oil pan by passing through the plurality of oil holes 39a from the outer peripheral side to the inner peripheral side of the column portion 39.

As shown in FIGS. 4 to 6, the joint portion 34 is a portion where a part of the main body portion 32 is divided. The joint portion 34 is formed by a pair of a joint end portion 5 and a joint end portion 6 facing each other. The joint portion 34 functions as a relief portion for thermal expansion of the main body portion 32 due to a temperature difference between the oil control ring 30 and the cylinder during use of the oil control ring 30.

With such an oil control ring 30, for example, when the piston 3 moves toward the top dead center side, engine oil is applied to the inner peripheral surface 4 of the cylinder by the first rail portion 37 and the second rail portion 38 to form an oil film. The oil control ring 30 scrapes off excess oil on the inner peripheral surface 4 of the cylinder by the first rail portion 37 and the second rail portion 38, for example, when the piston 3 moves toward the bottom dead center side. This allows an oil film of appropriate thickness to be formed on the inner peripheral surface 4 of the cylinder.

As shown in FIG. 7, the outer peripheral surface 32b of the main body portion 32 includes an outer peripheral surface 37a of the first rail portion 37 and an outer peripheral surface 38a of the second rail portion 38. The second rail portion 38 here is symmetrical with the first rail portion 37 in the axial direction with respect to the center of the main body portion 32 in the width direction. Therefore, the configuration of the first rail portion 37 will be described as a representative, and redundant description of the second rail portion 38 may be omitted.

The outer peripheral surface 37a of the first rail portion 37 has a so-called straight shape and includes a contact surface 37b. A connecting surface 37c is provided as an inclined portion connecting the side surface 32c and the contact surface 37b. A connecting surface 37d is provided as an inclined portion connecting the contact surface 37b and the column portion 39. The outer peripheral surface 38a of the second rail portion 38 has a so-called straight shape and includes a contact surface 38b.

The contact surface 37b and the contact surface 38b are each the surface of the outer peripheral surface 32b that protrudes the most in the radial direction. The contact surface 37b and the contact surface 38b slide in contact with the inner peripheral surface 4 of the cylinder when the oil control ring 30 is installed in the oil ring groove 2c of the piston 3. The contact surface 37b and the contact surface 38b extend over the entire circumference of the main body portion 32. The contact surface 37b and the contact surface 38b are substantially orthogonal to the side surfaces 32c and 32d and substantially parallel to the end surfaces (inner peripheral surfaces) 32e. The width of the contact surface 37b and the width of the contact surface 38b are each referred to as the land width. The land width may be, for example, 0.3 mm, 0.5 mm, or the like. For example, when the land width of the outer peripheral surface 37a of the first rail portion 37 and the land width of the outer peripheral surface 38a of the second rail portion 38 are equal to each other, the width (contact width) at which the outer peripheral surface 37a and the outer peripheral surface 38a contact the inner peripheral surface 4 of the cylinder is 0.6 mm, 1.0 mm, or the like, which is twice the land width.

The tension of the oil control ring 30 may be 30 N or more and 110 N or less. The tension of the oil control ring 30 can be measured in accordance with international standard ISO 6621-2:2020, in the same manner as the tension of the top ring 10.

The surface pressure of the contact surfaces (outer peripheral surfaces) 37b and 38b of the oil control ring 30 against the inner peripheral surface 4 of the cylinder (hereinafter also referred to as "surface pressure of the oil control ring 30") may be 0.89 MPa or more and 3.87 MPa or less. The surface pressure of the oil control ring 30 may be 0.89 MPa or more and 3.27 MPa or less. The surface pressure of the oil control ring 30 may be 0.89 MPa or more and 2.68 MPa or less. The surface pressure of the oil control ring 30 may be 0.89 MPa or more and 2.08 MPa or less. The surface pressure of the oil control ring 30 may be 0.89 MPa or more and 1.49 MPa or less. The surface pressure of the oil control ring 30 may be 0.89 MPa or more and 1.25 MPa or less. The surface pressure of the oil control ring 30 may be 1.25 MPa or more and 3.87 MPa or less. The surface pressure of the oil control ring 30 may be 1.49 MPa or more and 3.87 MPa or less. The surface pressure of the oil control ring 30 may be 2.08 MPa or more and 3.87 MPa or less. The surface pressure of the oil control ring 30 may be 2.68 MPa or more and 3.87 MPa or less. The surface pressure of the oil control ring 30 may be 3.27 MPa or more and 3.87 MPa or less. The surface pressure of the oil control ring 30 may be, for example, 2.08 MPa.

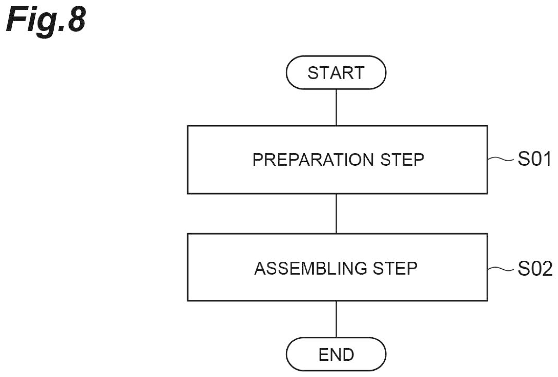

By configuring the piston ring set 100 as described above, generation of deposits is suppressed in an internal combustion engine using hydrogen fuel. FIG. 8 is a flowchart illustrating a method of suppressing generation of deposits in an internal combustion engine using hydrogen fuel according to one embodiment.

As shown in FIG. 8, the method of suppressing generation of deposits in an internal combustion engine using hydrogen fuel includes a preparation step (S01) of preparing a piston ring set including a pressure ring and an oil control ring of the internal combustion engine that uses hydrogen fuel. The preparation step includes, for example, preparing the top ring 10 as the pressure ring. The preparation step may include preparing the second ring 20 as the pressure ring. The preparation step includes preparing the oil control ring 30 as the oil control ring. That is, the preparation step includes preparing the piston ring set 100 including the top ring 10, the second ring 20, and the oil control ring 30.

The preparation step (S01) here includes a step of setting the surface pressure of the outer peripheral surface 15 of the top ring 10 against the inner peripheral surface 4 of the cylinder to 0.22 MPa or more and 0.69 MPa or less. This step can also be described as a step of setting the surface pressure of the top ring 10 to 0.22 MPa or more and 0.69 MPa or less so that the deposit accumulation amount ratio after a predetermined test for the top ring 10 is, for example, 0.2 or less. The preparation step (S01) here includes a step of setting the surface pressure of the contact surfaces 37b and 38b of the oil control ring 30 against the inner peripheral surface 4 of the cylinder to 0.89 MPa or more and 3.87 MPa or less. This step can also be described as a step of setting the surface pressure of the oil control ring 30 to 0.89 MPa or more and 3.87 MPa or less so that the deposit accumulation amount ratio after a predetermined test for the oil control ring 30 is, for example, 0.2 or less. By such a preparation step, generation of deposits on the top land 3c, the second land 3d, and the third land 3e of the piston 3 accompanying combustion of the hydrogen fuel is suppressed. Generation of deposits in the top ring groove 2a, the second ring groove 2b, and the oil ring groove 2c of the piston 3 accompanying combustion of the hydrogen fuel is suppressed.

The method of suppressing generation of deposits in an internal combustion engine using hydrogen fuel includes an assembling step (S02) of respectively assembling the pressure ring and the oil control ring into a plurality of ring grooves of a piston of the internal combustion engine. In the assembling step here, for example, the top ring 10 is assembled into the top ring groove (pressure ring groove) 2a. The second ring 20 is assembled into the second ring groove (pressure ring groove) 2b. The oil control ring 30 is assembled into the oil ring groove 2c. By such an assembling step, it becomes possible to operate the internal combustion engine that uses hydrogen fuel by using the piston ring set including the pressure ring and the oil control ring that suppress generation of deposits accompanying combustion of the hydrogen fuel.

In the piston ring set 100 and the method of suppressing generation of deposits described above, the surface pressure of the outer peripheral surface 15 of the top ring 10 against the inner peripheral surface 4 of the cylinder of the internal combustion engine is set to 0.22 MPa or more and 0.69 MPa or less. The surface pressure of the contact surfaces 37b and 38b of the oil control ring 30 against the inner peripheral surface 4 of the cylinder is set to 0.89 MPa or more and 3.87 MPa or less. This suppresses the tendency of the outer peripheral surface of the piston ring 1 and the inner peripheral surface 4 of the cylinder to wear due to excessively high surface pressure. An increase in engine oil rising due to excessively low surface pressure is suppressed. As a result, reaction between hydrogen gas that has leaked from the top surface 3b side of the piston 3 toward the crankcase through the top ring 10 and engine oil that has risen from the crankcase side toward the top land 3c, the second land 3d, and the third land 3e of the piston 3 through the oil control ring 30 is suppressed. Therefore, in an internal combustion engine using hydrogen fuel, it becomes possible to suppress generation of deposits on the top land 3c, the second land 3d, and the third land 3e of the piston 3 accompanying combustion of the hydrogen fuel. It becomes possible to suppress generation of deposits in the top ring groove 2a, the second ring groove 2b, and the oil ring groove 2c of the piston 3 accompanying combustion of the hydrogen fuel.

The plurality of ring grooves include, in order from the top surface 3b side of the piston 3, the top ring groove 2a into which the top ring 10 is assembled, the second ring groove 2b into which the second ring 20 is assembled, and the oil ring groove 2c into which the oil control ring 30 is assembled. The deposits may be generated on at least one of the second land 3d and the third land 3e between the top ring groove 2a and the oil ring groove 2c, or on the third land 3e between the second ring groove 2b and the oil ring groove 2c. In this case, generation of deposits on at least one of the second land 3d and the third land 3e of the piston 3 accompanying combustion of the hydrogen fuel is suppressed. As a result, it is possible to suppress deposits that have accumulated on at least one of the second land 3d and the third land 3e and increased in thickness from sliding against the inner peripheral surface 4 of the cylinder, and to suppress an increase in wear of the inner peripheral surface 4 of the cylinder.

### [Modifications of Piston Ring]

Although the embodiments of the present disclosure have been described above, the present disclosure is not limited to the above-described embodiments. The present disclosure can be implemented in various forms with various modifications and improvements based on the knowledge of those skilled in the art, including the above-described embodiments.

In the above embodiment, the surface pressure of the top ring 10 was set to 0.22 MPa or more and 0.69 MPa or less, and the surface pressure of the oil control ring 30 was set to 0.89 MPa or more and 3.87 MPa or less, but the present disclosure is not limited to this example. For example, only one of them may be adopted, such that either the surface pressure of the top ring 10 is set to 0.22 MPa or more and 0.69 MPa or less, or the surface pressure of the oil control ring 30 is set to 0.89 MPa or more and 3.87 MPa or less. Even in this case, the tendency of the outer peripheral surface of the piston ring 1 and the inner peripheral surface 4 of the cylinder to wear due to excessively high surface pressure is suppressed. Alternatively, an increase in engine oil rising due to excessively low surface pressure is suppressed. As a result, reaction between hydrogen gas that has leaked from the top surface 3b side of the piston 3 toward the crankcase through the top ring 10 and engine oil that has risen from the crankcase side toward the second land 3d and the third land 3e of the piston 3 through the oil control ring 30 is suppressed. Therefore, in an internal combustion engine using hydrogen fuel, it becomes possible to suppress generation of deposits on the top land 3c, the second land 3d, and the third land 3e of the piston 3 accompanying combustion of the hydrogen fuel. It becomes possible to suppress generation of deposits in the top ring groove 2a, the second ring groove 2b, and the oil ring groove 2c of the piston 3 accompanying combustion of the hydrogen fuel.

### Examples

The present disclosure will be described in further detail by the following examples, but the present disclosure is not limited to these examples.

As shown in Table 1 below, top rings of Examples 1 to 5 and Comparative Examples 1 to 4 were produced. First, a top ring having a symmetrical barrel-shaped outer peripheral surface was produced using a wire material equivalent to JIS-SUS440. The nominal diameter of the top ring was set to 112 mm. The measurement width of the barrel amount of the symmetrical barrel shape was set to 1.6 mm. The barrel amount and tension of the symmetrical barrel shape were set as shown in Table 1.

The contact width of the top rings of Examples 1 to 5 and Comparative Examples 1 to 4 against the inner peripheral surface 4 of the cylinder was estimated by assuming the outer peripheral surface of the top ring to be a parabola. Using the barrel amount and the measurement width of the barrel amount in Table 1, the contact width was estimated by assuming the assumed wear amount in the radial direction corresponding to the contact width to be 2 µm. Regarding the contact width against the inner peripheral surface 4 of the cylinder, the contact width in Example 1 was 0.800 mm. The contact width in Example 2 was 0.566 mm. The contact width in Example 3 was 0.800 mm. The contact width in Example 4 was 0.800 mm. The contact width in Example 5 was 0.800 mm. The contact width in Comparative Example 1 was 0.800 mm. The contact width in Comparative Example 2 was 2.263 mm. The contact width in Comparative Example 3 was 0.566 mm. The contact width in Comparative Example 4 was 2.263 mm.

The surface pressure of the top rings of Examples 1 to 5 and Comparative Examples 1 to 4 was calculated by the above-described equation (1). Regarding the surface pressure of the top ring, the surface pressure in Example 1 was 0.49 MPa. The surface pressure in Example 2 was 0.69 MPa. The surface pressure in Example 3 was 0.22 MPa. The surface pressure in Example 4 was 0.33 MPa. The surface pressure in Example 5 was 0.67 MPa. The surface pressure in Comparative Example 1 was 0.89 MPa. The surface pressure in Comparative Example 2 was 0.08 MPa. The surface pressure in Comparative Example 3 was 1.26 MPa. The surface pressure in Comparative Example 4 was 0.17 MPa.

**[Table 1]**

| Pressure Ring | | | | | | | | |
|---|---|---|---|---|---|---|---|---|
| | Barrel Amount [mm] | Measurement Width [mm] | Tension [N] | Nominal Diameter [nun] | Contact Width [mm] | Surface Pressure [MPa] | Deposit Accumulation Amount Ratio | Seizure State |
| Example 1 | 0.008 | 1.6 | 22 | 112 | 0.800 | 0.49 | 0.07 | - |
| Example 2 | 0.016 | 1.6 | 22 | 112 | 0.566 | 0.69 | 0.00 | Unseized |
| Example 3 | 0.008 | 1.6 | 10 | 112 | 0.800 | 0.22 | 0.13 | Unseized |
| Example 4 | 0.008 | 1.6 | 15 | 112 | 0.800 | 0.33 | 0.00 | - |
| Example 5 | 0.008 | 1.6 | 30 | 112 | 0.800 | 0.67 | 0.00 | - |
| Comparative Example 1 | 0.008 | 1.6 | 40 | 112 | 0.800 | 0.89 | 0.87 | Seized |
| Comparative Example 2 | 0.001 | 1.6 | 10 | 112 | 2.263 | 0.08 | 1.00 | - |
| Comparative Example 3 | 0.016 | 1.6 | 40 | 112 | 0.566 | 1.26 | 1.27 | - |
| Comparative Example 4 | 0.001 | 1.6 | 22 | 112 | 2.263 | 0.17 | 0.53 | Seized |

As shown in Table 2 below, oil control rings of Examples 11 to 17 and Comparative Examples 11 to 12 were produced. First, a first rail portion and a second rail portion each having an outer peripheral surface including a straight-shaped contact surface were produced using a special alloy steel wire material. The nominal diameter of the oil control ring was set to 112 mm. The land width and tension were set as shown in Table 2.

The contact width of the oil control rings of Examples 11 to 17 and Comparative Examples 11 to 12 against the inner peripheral surface 4 of the cylinder was set to twice the land width, as shown in Table 2. Regarding the contact width against the inner peripheral surface 4 of the cylinder, the contact width in Example 11 was 0.6 mm. The contact width in Example 12 was 1.0 mm. The contact width in Example 13 was 0.6 mm. The contact width in Example 14 was 0.6 mm. The contact width in Example 15 was 0.6 mm. The contact width in Example 16 was 0.6 mm. The contact width in Example 17 was 0.6 mm. The contact width in Comparative Example 11 was 0.6 mm. The contact width in Comparative Example 12 was 1.0 mm. The surface pressure of the oil control rings of Examples 11 to 17 and Comparative Examples 11 to 12 was calculated by the above-described equation (1). Regarding the surface pressure of the oil control ring, the surface pressure in Example 11 was 2.08 MPa. The surface pressure in Example 12 was 1.25 MPa. The surface pressure in Example 13 was 0.89 MPa. The surface pressure in Example 14 was 1.49 MPa. The surface pressure in Example 15 was 2.68 MPa. The surface pressure in Example 16 was 3.27 MPa. The surface pressure in Example 17 was 3.87 MPa. The surface pressure in Comparative Example 11 was 4.46 MPa. The surface pressure in Comparative Example 12 was 0.54 MPa.

**[Table 2]**

| Oil Ring | | | | | | | |
|---|---|---|---|---|---|---|---|
| | Land Width [mm] | Tension [N] | Nominal Diameter [mm] | Contact Width [nun] | Surface Pressure [MPa] | Deposit Accumulation Amount Ratio | Seizure State |
| Example 11 | 0.3 | 70 | 112 | 0.6 | 2.08 | 0.06 | - |
| Example 12 | 0.5 | 70 | 112 | 1.0 | 1.25 | 0.06 | - |
| Example 13 | 0.3 | 30 | 112 | 0.6 | 0.89 | 0.19 | Unseized |
| Example 14 | 0.3 | 50 | 112 | 0.6 | 1.49 | 0.13 | - |
| Example 15 | 0.3 | 90 | 112 | 0.6 | 2.68 | 0.00 | - |
| Example 16 | 0.3 | 110 | 112 | 0.6 | 3.27 | 0.00 | - |
| Example 17 | 0.3 | 130 | 112 | 0.6 | 3.87 | 0.00 | Unseized |
| Comparative Example 11 | 0.3 | 150 | 112 | 0.6 | 4.46 | 1.06 | Seized |
| Comparative Example 12 | 0.5 | 30 | 112 | 1.0 | 0.54 | 1.00 | Seized |

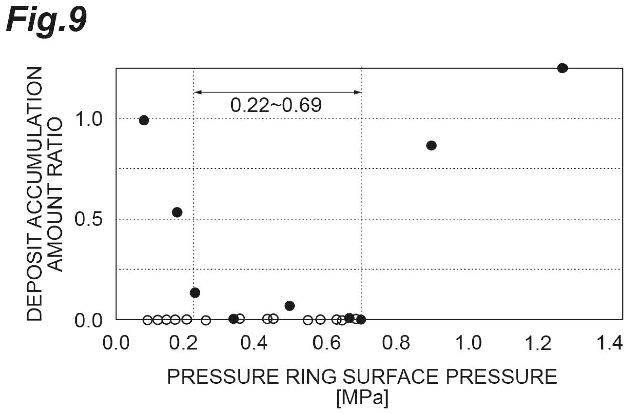

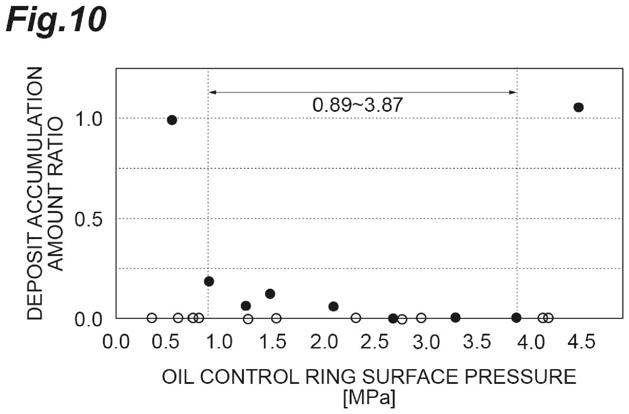

With reference to FIGS. 9 and 10, simulation results of the effects of deposit generation in an internal combustion engine using hydrogen fuel will be described. In FIGS. 9 and 10, for an internal combustion engine using hydrogen fuel, an operation was assumed in which combustion of hydrogen fuel was performed on a test bench with a radiator outlet water temperature of 85±2°C, an intercooler outlet water temperature of 40±5°C, and the oil temperature left unregulated. A simulation was performed to simulate the deposit accumulation amount ratio and the seizure state of the piston ring when operated at a predetermined partial load at an engine speed of 1000 rpm for a predetermined time. The predetermined operating time for the deposit accumulation amount ratio was 100 hours, and the predetermined operating time for the seizure state of the piston ring was 3000 hours.

FIG. 9 is a simulation result of the deposit accumulation amount ratio and the seizure state of the piston ring. The simulation of FIG. 9 corresponds to the case of using the top rings of Examples 1 to 5 and Comparative Examples 1 to 4 in Table 1, a second ring having a tapered outer peripheral surface with a surface pressure of 0.92 MPa, and an oil control ring having a straight outer peripheral surface with a surface pressure of 2.08 MPa. The black circle plots are plots corresponding to the top rings of Examples 1 to 5 and Comparative Examples 1 to 4 in Table 1. The white circle plots are plots for conventional internal combustion engines using hydrocarbon fuel. In FIGS. 9 and 10, for comparison, the deposit accumulation amount ratio for deposits other than carbon sludge in conventional internal combustion engines is plotted with white circles.

As shown in FIG. 9, for Examples 1 to 5 in Table 1, it was estimated that the deposit accumulation amount ratio would be 0.2 or less, and for Comparative Examples 1 to 4 in Table 1, it was estimated that the deposit accumulation amount ratio would exceed 0.5. In this way, it was estimated that by setting the surface pressure of the top ring to 0.22 MPa or more and 0.69 MPa or less, it is possible to set the deposit accumulation amount ratio after a predetermined test for the top ring to 0.2 or less. In addition, for the top rings of Example 2 and Example 3, it was estimated that the seizure state of the piston ring would remain unseized even after 3000 hours of operation. In contrast, for the top rings of Comparative Example 1 and Comparative Example 4, it was estimated that the seizure state of the piston ring would become seized after 3000 hours of operation.

FIG. 10 is a simulation result of the deposit accumulation amount ratio and the seizure state of the piston ring. The simulation of FIG. 10 corresponds to the case of using a top ring having a symmetrical barrel-shaped outer peripheral surface with a surface pressure of 0.49 MPa, a second ring having a tapered outer peripheral surface with a surface pressure of 0.92 MPa, and the oil control rings of Examples 11 to 17 and Comparative Examples 11 to 12 in Table 2.

As shown in FIG. 10, for Examples 11 to 17 in Table 2, it was estimated that the deposit accumulation amount ratio would be 0.2 or less, and for Comparative Examples 11 to 12 in Table 2, it was estimated that the deposit accumulation amount ratio would exceed 0.5. In this way, it was estimated that by setting the surface pressure of the oil control ring to 0.89 MPa or more and 3.87 MPa or less, it would be possible to set the deposit accumulation amount ratio after a predetermined test for the oil control ring to 0.2 or less. In addition, for the oil control rings of Example 13 and Example 17, it was estimated that the seizure state of the piston ring would remain unseized even after 3000 hours of operation. In contrast, for the oil control rings of Comparative Example 11 and Comparative Example 12, it was estimated that the seizure state of the piston ring would become seized after 3000 hours of operation.

### Reference Signs List

1: Piston ring; 2: Ring groove; 2a: Top ring groove (pressure ring groove); 2b: Second ring groove (pressure ring groove); 2c: Oil ring groove; 3: Piston; 3c: Top land (land portion); 3d: Second land (land portion); 3e: Third land (land portion); 4: Inner peripheral surface of cylinder; 10: Top ring (pressure ring); 15, 25, 37a, 38a: Outer peripheral surface; 20: Second ring (pressure ring); 30: Oil control ring; 37b, 38b: Contact surface (outer peripheral surface); 100: Piston ring set.

## Claims

1. A piston ring set for an internal combustion engine that uses hydrogen fuel, the piston ring set comprising a pressure ring and an oil control ring that are to be respectively assembled into a plurality of ring grooves of a piston of the internal combustion engine,
wherein, by setting a surface pressure of an outer peripheral surface of the pressure ring against an inner peripheral surface of a cylinder of the internal combustion engine to 0.22 MPa or more and 0.69 MPa or less, and setting a surface pressure of an outer peripheral surface of the oil control ring against the inner peripheral surface of the cylinder to 0.89 MPa or more and 3.87 MPa or less, generation of deposits on a land portion of the piston and in the ring grooves accompanying combustion of the hydrogen fuel is suppressed.

2. The piston ring set for an internal combustion engine that uses hydrogen fuel according to claim 1,
wherein the plurality of ring grooves include, in order from a top surface of the piston, a pressure ring groove into which the pressure ring is assembled, and an oil ring groove into which the oil control ring is assembled, and
wherein the deposits are generated on the land portion between the pressure ring groove and the oil ring groove.

3. A piston ring for an internal combustion engine that uses hydrogen fuel, the piston ring comprising a pressure ring that is to be assembled into a ring groove of a piston of the internal combustion engine,
wherein, by setting a surface pressure of an outer peripheral surface of the pressure ring against an inner peripheral surface of a cylinder of the internal combustion engine to 0.22 MPa or more and 0.69 MPa or less, generation of deposits on a land portion of the piston and in the ring groove accompanying combustion of the hydrogen fuel is suppressed.

4. A piston ring for an internal combustion engine that uses hydrogen fuel, the piston ring comprising an oil control ring that is to be assembled into a ring groove of a piston of the internal combustion engine,
wherein, by setting a surface pressure of an outer peripheral surface of the oil control ring against an inner peripheral surface of a cylinder of the internal combustion engine to 0.89 MPa or more and 3.87 MPa or less, generation of deposits on a land portion of the piston and in the ring groove accompanying combustion of the hydrogen fuel is suppressed.

5. A method of suppressing generation of deposits in an internal combustion engine that uses hydrogen fuel, the method comprising:
a preparation step of preparing a piston ring set including a pressure ring and an oil control ring of the internal combustion engine that uses hydrogen fuel; and
an assembling step of respectively assembling the pressure ring and the oil control ring into a plurality of ring grooves of a piston of the internal combustion engine,
wherein the preparation step includes at least one of:
a step of setting a surface pressure of an outer peripheral surface of the pressure ring against an inner peripheral surface of a cylinder of the internal combustion engine to 0.22 MPa or more and 0.69 MPa or less, and
a step of setting a surface pressure of an outer peripheral surface of the oil control ring against the inner peripheral surface of the cylinder to 0.89 MPa or more and 3.87 MPa or less,
so that generation of deposits on a land portion of the piston and in the ring grooves accompanying combustion of the hydrogen fuel is suppressed.
